# EUROPÄISCHE PATENTANMELDUNG

(11) **EP 1 683 661 A1**
(43) Veröffentlichungstag der Anmeldung: **26.07.2006**
(21) Anmeldenummer: 06000486.8
(22) Anmeldetag: 11.01.2006
(51) Int. Cl.: B60G 17/015, B60G 17/016, B60G 17/0195, B60W 10/02, B60W 10/04, B60W 10/10, B60W 10/22, B60W 40/10

(54) **Verfahren und Einrichtung zur Steigerung des Fahrkomforts sowie zur Verkürzung der Schaltzeit**

(30) Priorität: 13.01.2005 DE 102005001506
(71) Anmelder: ZF FRIEDRICHSHAFEN AG, 88038 Friedrichshafen (DE)
(72) Erfinder: Doebele, Bernd, 88682 Salem (DE); Wiencek, Norbert, 88709 Hagnau (DE)

(57) **Zusammenfassung**

Die Erfindung betrifft ein Verfahren und eine Einrichtung zur Steigerung des Fahrkomforts sowie zur Verkürzung der Schaltzeit beim Gangwechsel eines Stufengetriebes in einem Kraftfahrzeug, insbesondere bei einem Nutzfahrzeug mit einem Auflieger, wobei zum Zeitpunkt einer Last-Rücknahme im Zuge einer Einleitung eines Gangwechsels die Dämpfung zwischen dem Fahrzeugrahmen und der Vorderachse derart gesteuert wird, dass die Lage des Fahrzeugrahmens im wesentlichen beibehalten wird, wodurch der Fahrkomfort gesteigert wird und die Schaltzeit beim Gangwechsel verkürzt wird.

## Beschreibung

Die Erfindung betrifft ein Verfahren und eine Einrichtung zur Steigerung des Fahrkomforts sowie zur Verkürzung der Schaltzeit beim Gangwechsel eines Stufengetriebes in einem Kraftfahrzeug, insbesondere in einem Nutzfahrzeug mit einem Auflieger gemäß dem Oberbegriff der Patentansprüche 1 bzw. 8.

Bei Nutzfahrzeugen und speziell bei Sattelzugmaschinen führen das Gewicht des Aufliegers sowie der Höhenversatz zwischen Radachsmitte und Aufliegerkupplung im beschleunigten Fahrzustand zu einer deutlichen Entlastung der Vorderachse. Wird aus einem derartigen Betriebszustand ein Gangwechsel erforderlich, so wird üblicherweise die Zugkraft der treibenden Achse(n) kontinuierlich reduziert werden, da eine Belastung der Vorderachse und die Einfederung von Rahmen und Kabine des Fahrzeugs nicht stoßartig einsetzen dürfen. Andererseits würde das Fahrzeug eine übermäßige "Nick"-Bewegung durchführen, welche zumindest den Fahrkomfort des Fahrzeugführers negativ beeinflussen würde.

Da andererseits in Situationen hohen Fahrwiderstands, beispielsweise bei Fahrten am Hang oder bei hoher Geschwindigkeit, die Dauer der Zugkraftunterbrechung zur Vermeidung einer Geschwindigkeitsreduzierung des Fahrzeugs minimal zu halten ist, kann die Art der Reduzierung der Zugkraft hinsichtlich des Komfortaspekts nur kompromissbehaftet ausgeführt werden.

Aus der DE 38 21 569 C2 ist ein Kraftfahrzeug bekannt, bei dem die Fahrzeugräder über Gasfedern und Schwingungsdämpfer gegen die Karosserie -abgestützt sind. Dabei ist sowohl eine Veränderung des Druckes in den Gasfedern als auch eine Veränderung der Dämpfer-Charakteristik, das heißt des Dämpferkraftniveaus, in den zu den Gasfedern parallel geschalteten Schwingungsdämpfern möglich, um das Federungsverhalten des Fahrzeugs zu beeinflussen. Die Druckschrift behandelt das Problem, die Gasfedern und Schwingungsdämpfer so aufeinander abzustimmen, dass beim Fahren auf einer unebenen Wegstrecke Fahrzeugbeschädigung vermieden werden und der Fahrkomfort erhöht wird. Dazu wird der tatsächliche Fahrzustand durch Sensoren erfasst und in einer Steuereinrichtung ausgewertet. Kommt die Auswertung zu dem Ergebnis, dass eine schlechte Wegstrecke zu schnell befahren wird, so erfolgt ein automatischer Eingriff in den Betrieb des Kraftfahrzeugs durch eine Geschwindigkeitsreduzierung. Gegebenenfalls wird eine Gasfederdruckerhöhung und/oder eine Veränderung der Dämpfer-Charakteristik in Richtung zu einer höheren Dämpferkraft ausgeführt. Somit kann der Fahrkomfort erhöht werden. Durch die Steuerung des Dämpferkraftniveaus, wie in der Druckschrift angegeben, wird zwar der Fahrkomfort erhöht, allerdings kann das Problem der Nickbewegung des Kraftfahrzeugs bei einer Zugkraftunterbrechung nicht gelöst werden.

Eine Kombination einer Niveauregulierung mit einer automatischen oder auch manuell einstellbaren Fahrwerkabstimmung ist im Zusammenhang mit einem hydropneumatischen Federungssystem, wie in der DE 198 44 493 offenbart, bekannt. Dieses Fahrwerk erzielt eine Umschaltung zwischen einer weichen, komfortablen Fahrwerkabstimmung einerseits und einer harten Fahrwerkabstimmung andererseits durch die Aktivierung bzw. Deaktivierung von hydropneumatischen Elementen. Eine Veränderung der Dämpfercharakteristik ebenfalls vorhandener Schwingungsdämpfer ist dabei nicht vorgesehen. Das hydropneumatische Federungssystem umfasst vielmehr für jeden Schwingungsdämpfer ein eigenes hydropneumatisches Federelement sowie zwei zusätzliche hydropneumatische Federelemente in Achsmitte. Werden für eine komfortable Abstimmung sämtliche Federelemente aktiviert, so bleiben im Fall einer sportlichen bzw. harten Abstimmung die in Achsmitte angeordneten Kugelfederelemente deaktiviert. Durch die hydraulische Druckerzeugung, die Vielzahl der benötigten Federelemente und insbesondere die Anordnung von zwei Federelementen in Achsmitte ist der konstruktive Aufwand hoch. Zusätzlich wird auch hier das Problem der Nickbewegung des Kraftfahrzeugs bei einer Zugkraftunterbrechung nicht gelöst.

Der Erfindung liegt daher die Aufgabe zugrunde, ein Verfahren und eine Einrichtung vorzustellen, mit denen auf einfache Weise und durch geringen konstruktiven Aufwand der Fahrkomfort gesteigert sowie die Schaltzeit beim Gangwechsel eines Stufengetriebes in einem Fahrzeug verringerbar ist.

Die Lösung dieser Aufgabe ergibt sich aus den Merkmalen der Patentansprüche 1 und 8, während vorteilhafte Ausgestaltungen und Weiterbildungen der Erfindung den Unteransprüchen entnehmbar sind.

Gemäß den Verfahrensmerkmalen des Anspruchs 1 wird diese Aufgabe dadurch gelöst, dass zum Zeitpunkt einer Last-Rücknahme im Zuge einer Einleitung eines Gangwechsels die Dämpfung zwischen dem Fahrzeugrahmen und der Vorderachse des Fahrzeugs derart gesteuert wird, dass die Lage des Fahrzeugrahmens im wesentlichen beibehalten wird.

Auf diese Weise wird die Einfederung aus der sich insbesondere bei einem Sattellastkraftfahrzeug mit einem Auflieger stark ändernden Achsbelastung erheblich gedämpft, so dass zum Zeitpunkt der Last-Rücknahme verhindert wird, dass der Fahrzeugrahmen in die Lage zurückfällt oder kippt, die dieser bei einem Fahrzeugstillstand einnimmt. Dies erhöht ganz wesentlich den Fahrkomfort.

Ein weiterer Vorteil ist darin zu sehen, dass die kontinuierliche Reduzierung der Zugkraft der treibenden Achse, welche herkömmlicherweise zur Einleitung einer Übersetzungsänderung des Fahrzeuggetriebes angewendet wird, um die beschriebene Nickbewegung um die Fahrzeugquerachse zu verhindern, nunmehr wegfallen kann. Dadurch kann der Schaltvorgang innerhalb eines viel kürzeren Zeitraumes durchgeführt werden, wodurch die Dauer der Zugkraftunterbrechung sehr viel kürzer ausfällt. Dies wirkt sich insbesondere in Situationen bei hohem Fahrtwiderstand, zum Beispiel bei einer Fahrt am Hang oder bei hoher Geschwindigkeit, sehr positiv aus.

Es kann nämlich einerseits durch die vorteilhafte Verkürzung des Gangwechsels die Beschleunigung des Fahrzeugs aus dem Stand erhöht werden, des weiteren kann über die Gesamtfahrt gemittelt insgesamt die Durchschnittsgeschwindigkeit des Fahrzeugs erhöht werden, und zudem kann durch eine nun möglichst schnelle Weiterleitung der Zugkraft auch der Kraftstoffverbrauch des Fahrzeugs reduziert werden.

Vorzugsweise wird ein Dämpferkraft-Niveau von wenigstens einem Schwingungsdämpfer der Vorderachse durch eine externe Ansteuerung in Ansprechen auf den bevorstehenden und/oder ablaufenden Gangwechsel gesteuert.

Dadurch kann auf einfache und kostengünstige Weise die Steuerung der Dämpfung über die bereits im Dämpfungssystem enthaltenen Schwingungsdämpfer der Vorderachsen durchgeführt werden. Hierzu wird das Dämpferkraft-Niveau in Ansprechen auf eine externe Ansteuerung variiert, und zwar derart, dass die Schwingungsdämpfer zum Zeitpunkt der Einleitung eines Gangwechsels eine erhöhte Dämpfung aufweisen, die der ohne andere Maßnahmen zu erwartenden Nickbewegung des Fahrzeugaufbaus entgegenwirkt.

Nach Beendigung des Gangwechsels, also nach einem Schaltvorgang in einen höheren oder niedrigeren Gang, wird das Dämpferkraft-Niveau der Schwingungsdämpfer derart gesteuert, dass die Dämpfung allmählich wieder in den Ursprungszustand vor Einleitung des Gangwechsels zurückkehrt. Durch dieses Verfahren wird demnach während des Gangwechsels die Lage des Fahrzeugrahmens im Verhältnis zur Fahrbahn im wesentlichen beibehalten.

Vorzugsweise wird zur Steuerung des Dämpferkraft-Niveaus eine druckseitige Dämpferstufe der Schwingungsdämpfer derart gedrosselt, dass die Lage des Fahrzeugrahmens zumindest weitgehend beibehalten wird.

Durch dieses Verfahren kann der Fahrkomfort des Fahrzeugs gesteigertwerden und zugleich die Schaltzeit beim Gangwechsel verkürzt werden, wobei im wesentlichen auf bereits vorhandene Komponenten eines Dämpfungssystems und der Getriebesteuerung zurückgegriffen wird. Dadurch ist dieses Verfahren kostengünstig durchführbar.

Vorzugsweise ist das Verfahren gekennzeichnet durch die folgenden Schritte: Erfassen der Einleitung eines Gangwechsels durch eine Sensoreinrichtung und Erzeugen von Erfassungssignalen, Zuführen der Erfassungssignale an eine Steuereinrichtung, Steuern einer Druckversorgungseinrichtung zur Versorgung der Schwingungsdämpfer mit Druck in Ansprechen auf die Erfassungssignale durch die Steuereinrichtung, wodurch die Druckzuführung an die Schwingungsdämpfer in Abhängigkeit von Parameterwerten derart gesteuert wird, dass das Dämpferkraft-Niveau erhöht wird, und Rückführen des Dämpferkraft-Niveaus auf ein Ausgangsniveau innerhalb eines vorbestimmten Rückführungsintervalls.

Ein Vorteil dieses Verfahrens liegt darin, dass die Anzahl der Verfahrensschritte sehr gering ist, welches den konstruktiven Aufwand reduziert, eine hohe Zuverlässigkeit bereitstellt und nur einer geringen Wartung bedarf.

Bevorzugt beginnt das Rückführintervall zur Rückstellung der Dämpfereinstellung auf den Ausgangswert nach Beendigung des Gangwechsels.

Vorzugsweise wird die Druckversorgungseinrichtung zusätzlich in Ansprechen auf vorbestimmte Parameterwerte gesteuert. Favorisiert wird, dass diese Parameterwerte insbesondere Werte in Abhängigkeit vom Gewicht und/oder von der Geschwindigkeit des Kraftfahrzeugs und/oder Werte in Abhängigkeit von der Fahrbahnbeschaffenheit und/oder vom Fahrer eingegebene Werte sind. Jedoch können die Parameterwerte eine Vielzahl weiterer Werte enthalten, welche im wesentlichen die Fahrzeugcharakteristika widerspiegeln.

Diese Parameterwerte können zur Berechnung des notwendigen Dämpferkraft-Niveaus notwendig sein. Beispielsweise kann das Ausmaß der Nickbewegung des Kraftfahrzeugs, insbesondere des Zugfahrzeuges eines Sattelschleppers, in Abhängigkeit vom Gewicht des Fahrzeugs varüeren. Somit kann also beispielsweise die Nickbewegung bei einem Getriebeschaltvorgang sehr stark ausgeprägt sein, wenn die Gewichtslast des Fahrzeugs auf die Vorderachse sehr hoch ist, während diese bei geringerem Gewicht niedriger ausfällt.

Somit müsste also bei höherem Gewicht, welches auf die Vorderachse wirkt, an den Schwingungsdämpfern auch ein höheres Dämpferkraft-Niveau erzeugt werden. Ebenfalls kann die Geschwindigkeit des Fahrzeugs zur Steuerung des Dämpferkraft-Niveaus eine Rolle spielen. So fällt zum Beispiel ein gleich starkes "Nicken" um die Fahrzeugquerachse bei einer hohen Geschwindigkeit als den Fahrkomfort sehr viel beeinträchtigender auf als bei einer niedrigeren Geschwindigkeit. Somit wäre vorzugsweise zur Steuerung des Dämpferkraft-Niveaus bei hohen Geschwindigkeiten eine höhere Dämpfung einzustellen als bei niedrigen Geschwindigkeiten.

Die erfindungsgemäße Einrichtung enthält Federelemente zur Abstützung jeweils einer Vorderachse gegen einen Fahrzeugrahmen, wobei diese jeweils eine federnde Wirkung haben, Schwingungsdämpfer zur Abstützung jeweils einer Vorderachse gegen den Fahrzeugrahmen, welche parallel zu den Federelementen angeordnet sind, wobei sie zwischen mehreren Zuständen mit unterschiedlich hohem Dämpferkraft-Niveau steuerbar ausgebildet sind, mindestens eine Druckversorgungseinrichtung zur Versorgung der Schwingungsdämpfer mit einem unter Druck stehendem Druckmittel, eine Sensoreinrichtung zum Erfassen einer Einleitung eines Gangwechsels des Getriebes und eine Steuereinrichtung, welche in Ansprechen auf den sensierten Gangwechsel sowie auf vorbestimmte Parameterwerte Steuersignale für die Druckversorgung der Schwingungsdämpfer erzeugt.

Vorteilhafterweise greift die erfindungsgemäße Einrichtung im wesentlichen auf herkömmliche Komponenten eines Dämpfungssystems zurück. Die Steuereinrichtung erfasst zunächst Signale einer Sensoreinrichtung, welche die Einleitung eines Gangwechsels feststellt. Derartige Signale können beispielsweise an einem Fahrpedal, an einem Bremspedal und/oder an einer Getriebewählhebelvorrichtung gewonnen werden.

In einer alternativen Ausführungsform kann die Steuereinrichtung Signale von einer weiteren Sensoreinrichtung empfangen, welche eine Zugkraft-Unterbrechung erfasst. Eine solche Sensoreinrichtung kann dabei als ein herkömmlicher Drehmoment-Sensor ausgebildet sein.

Wird eine Einleitung eines Gangwechsels und/oder eine Zugkraft-Unterbrechung durch die Sensoren erfasst, werden entsprechende Erfassungssignale an die Steuereinrichtung gesendet. Die Steuereinrichtung berechnet dann in Ansprechen auf vorbestimmte Parameterwerte, welche in einem RAM-Speicher, ROM-Speicher oder in einer sonstigen Speichereinrichtung gespeichert sind, ein notwendiges Dämpferkraft-Niveau, welches ausreicht, um die Lage des Fahrzeugrahmens im wesentlichen beizubehalten.

Vorzugsweise sind die Parameterwerte insbesondere Werte in Abhängigkeit vom Gewicht und/oder von der Geschwindigkeit des Kraftfahrzeugs und/oder Werte in Abhängigkeit von der Fahrbahnbeschaffenheit und/oder vom Fahrer eingegebene Werte. Jedoch können die Pararrieterwerte eine Vielzahl weiterer Werte enthalten, welche im wesentlichen die Fahrzeugcharakteristika widerspiegeln. Dies kann vorteilhafterweise eine Veränderung der Parameterwerte in Abhängigkeit von der Fahrzeuglängsbeschleunigung und der Gangübersetzung des Getriebes im Antriebsstrang und/oder des resultierenden Hinterachsdrehmomentes darstellen. In kleinen Gangstufen muss der Aufbau des Hinterachsmomentes mittels Motoreingriff vorsichtig erfolgen, während in hohen Gangstufen der Aufbau des Hinterachsmomentes ohne Komfortverlust sehr rasch erfolgen kann.

Ist der Gangwechsel vollzogen und wird die Zugkraft wieder vollständig auf die Antriebsachse übertragen, so wird das Dämpferkraft-Niveau wieder auf das Ausgangsniveau zurückgeführt. Diese Rückführung findet dabei stufenförmig innerhalb eines vorbestimmten Rückführungsintervalls statt. Auch diese Steuerung des Rückführens des Dämpferkraft-Niveaus auf das Ausgangsniveau kann in Abhängigkeit von den vorbestimmten Parameterwerten durchgeführt werden. Ebenfalls kann die Dauer des vorbestimmten Rückführungsintervalls in Abhängigkeit von den vorbestimmten Parameterwerten gesteuert werden.

Alternativ kann in einer vorteilhaften Ausgestaltung und in Abhängigkeit von der geschalteten Getriebestufe das Rückführintervall auch schon während des Gangwechsels beginnen und die veränderte Dämpfereinstellung zeitlich gesteuert in den Ausgangszustand versetzt werden.

Die Erfindung lässt sich anhand eines Ausführungsbeispiels weiter erläutern. Dazu ist der Beschreibung eine Zeichnung beigefügt. In dieser zeigt
- Fig. 1 a-c: jeweils schematisch einen Belastungszustand einer Vorderachse eines Sattelschlepper-Zugfahrzeuges mit einem Auflieger und
- Fig. 2: eine Einrichtung zur Steigerung des Fahrkomforts und Verkürzung der Schaltzeit beim Gangwechsel gemäß der vorliegenden Erfindung.

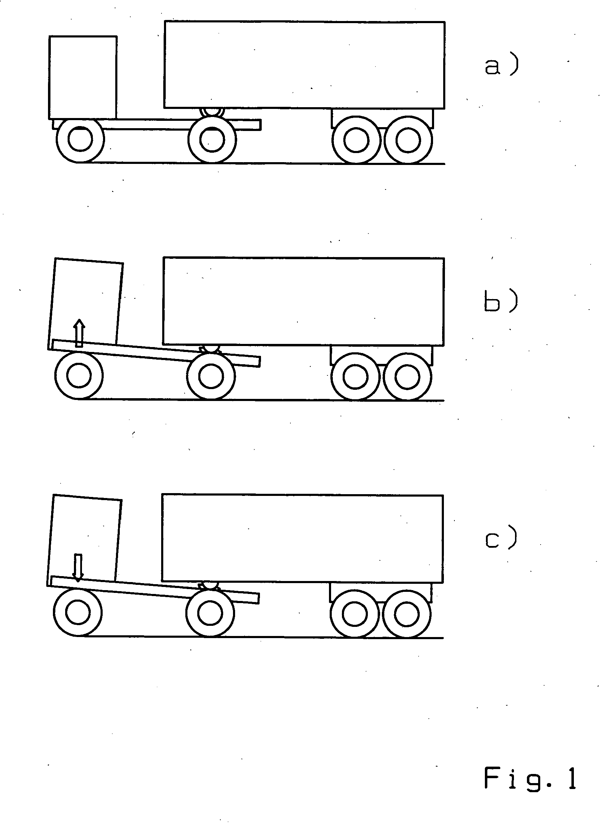

Fig. 1 a zeigt einen antriebsmomentfreien Zustand des Nutzfahrzeugs, vorwiegend eines Sattelschlepper-Zugfahrzeuges mit einem Auflieger, also im Stillstand dieses Fahrzeugs. In diesem Zustand ist der Fahrzeugrahmen des Zugfahrzeuges im wesentlichen horizontal bzw. parallel zur Fahrbahn ausgerichtet.

Fig. 1 b zeigt einen Belastungszustand der Vorderachse bei einem Fahrzustand des Nutzfahrzeugs. Hierbei erzeugt das Antriebsdrehmoment, welches auf die Hinterachse ausgeübt wird, ein Gegendrehmoment, welches in entgegengesetzter Drehrichtung, also im Uhrzeigersinn auf die Hinterachse wirkt. Dieses Gegendrehmoment bewirkt eine Kipp-Bewegung des Fahrzeugrahmens des Zugfahrzeuges, wodurch schließlich die Vorderachse entlastet wird. Diese Entlastung ist durch einen in Fig. 1 b dargestellten, nach oben gerichteten Pfeil dargestellt. Da die Zunahme des Hinterachsdrehmoments, insbesondere bei einem beladenen Nutzfahrzeug, in der Regel vergleichsweise langsam ist, vollzieht sich auch die Kipp-Bewegung des Fahrzeugrahmens vergleichsweise langsam und wirkt sich somit auf den Fahrer kaum störend aus.

In Fig. 1 c ist schematisch der Zustand des Nutzfahrzeugs zum Zeitpunkt einer Einleitung eines Gangwechsels dargestellt. Insbesondere bei manuell oder automatisiert schaltbaren Stufenwechselgetrieben wird die Zugkraft während des Gangwechsels unterbrochen. Dadurch fällt innerhalb von kurzer Zeit das Hinterachsdrehmoment auf Null ab, wodurch auch das Gegendrehmoment zurückgeht, welches zur Folge hat, dass auch die Kipp-Stellung der Zugmaschine beinahe schlagartig zurückgestellt wird.

Herkömmlicherweise wird sich also innerhalb von nur sehr kurzer Zeit die Lage des Fahrzeugrahmens auf die in Figur 1 a gezeigte Ausgangslage zurückbewegen - die Fahrerkabine wird dabei eine Nickbewegung machen, welches für den Fahrzeugführer unangenehm ist. Die Belastung der Vorderachse durch den Übergang in den antriebsmomentfreien Zustand bei Vorbereitung des Gangwechsels ist in Fig. 1 c durch einen nach unten gerichteten Pfeil dargestellt.

Zusammengefasst lässt sich die Lageänderung des Fahrzeugs ohne aktive Dämpfer-Beeinflussung, das heißt, ohne Steuerung des Dämpferkraft-Niveaus, durch eine Abfolge der Fig. 1a - 1b - 1c darstellen. Während der Fahrt kreisen die Lage-Zustände der Zugmaschine bei jedem Gangwechsel zwischen den in den Fig. 1 b und 1 c dargestellten Zuständen - die Zugmaschine des Sattelschleppers "nickt" also wiederholt bei jedem Gangwechsel.

Im Gegensatz dazu wird bei der Nutzung des Verfahrens und der Einrichtung gemäß der Erfindung diese Bewegung um die Querachse der Zugmaschine weitgehend unterdrückt, indem das Dämpferkraft-Niveau erfindungsgemäß gesteuert wird. Dabei wird bei Einleitung eines Gangwechsels, das heißt bei Zugkraft-Unterbrechung, das Dämpferkraft-Niveau der Schwingungsdämpfer der Vorderachse derart gesteuert, dass der Kraft, welche in Fig. 1c durch den Pfeil dargestellt ist, eine Gegenkraft in entgegengesetzter Richtung entgegengesetzt wird, wobei die sich überlagernden Kräfte für den gewünschten Kräfteausgleich sorgen.

Dieser Kräfteausgleich wiederum sorgt dafür, dass die Lage des Fahrzeugrahmens im wesentlichen beibehalten wird, wodurch der Fahrkomfort gesteigert und die Schaltzeit beim Gangwechsel verkürzt wird. Die LageÄnderung der Zugmaschine mit aktiver Dämpfer-Beeinflussung, also bei Steuerung des Dämpferkraft-Niveaus, kann somit schematisch als eine Abfolge der Fig. 1a - 1b - 1b dargestellt werden.

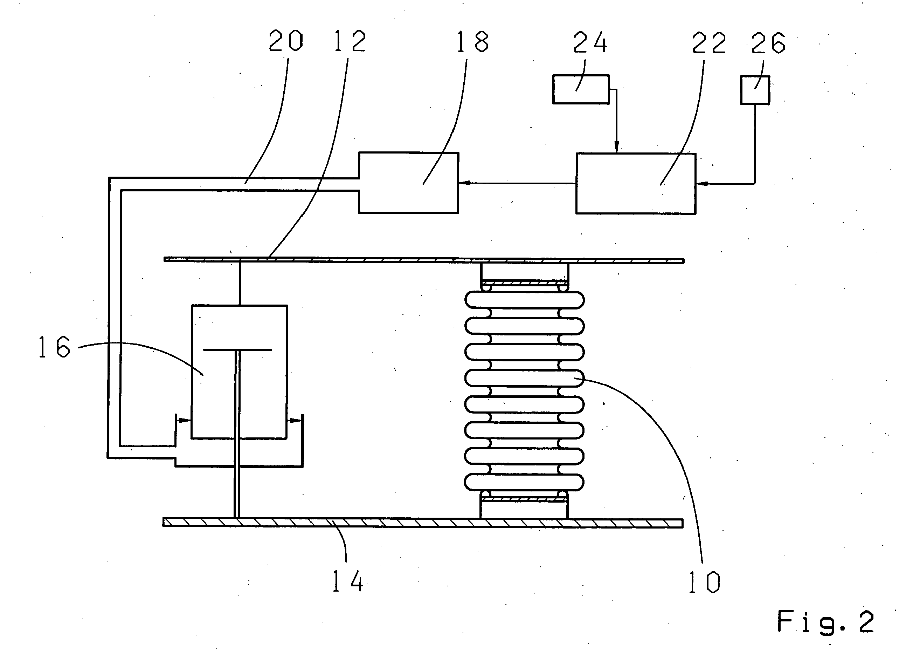

Fig. 2 stellt eine Einrichtung zur Steigerung des Fahrkomforts und Verkürzung der Schaltzeit beim Gangwechsel gemäß der vorliegenden Erfindung in einer schematischen Darstellung dar. In Fig. 2 ist ein Federelement 10 zur Abstützung jeweils einer Vorderachse gegen einen Fahrzeugrahmen dargestellt. In Fig. 2 sind Vorderachse und Fahrzeugrahmen nicht gezeigt, jedoch ist deren gedämpfte Federverbindung schematisch durch zwei horizontale Ebenen 12, 14 veranschaulicht.

In Fig. 2 ist ebenfalls ein Schwingungsdämpfer 16 zur Abstützung jeweils einer Vorderachse gegen den Fahrzeugrahmen gezeigt. Der Schwingungsdämpfer 16 ist parallel zum Federelement 10 angeordnet und zwischen mehreren Zuständen mit unterschiedlich hohem Dämpferkraft-Niveau steuerbar. Mit 18 ist eine Druckversorgungseinrichtung gekennzeichnet, welche dem Schwingungsdämpfer 16 ein unter einem Druck stehendes Druckmittel zuführt und beispielsweise als elektrische Pumpe ausgebildet ist.

Die Druckversorgungseinrichtung 18 ist über eine Druckleitung 20 mit dem Schwingungsdämpfer 16 verbunden. Die Druckversorgungseinrichtung 18 ist zudem elektrisch mit einer Steuereinrichtung 22 verbunden, welche in Ansprechen auf einen Gangwechsel und auf vorbestimmte Parameterwerte Steuersignale für die Druckversorgungseinrichtung 18 zur Druckversorgung des Schwingungsdämpfers 16 erzeugt. Die vorbestimmten Parameterwerte sind dabei in einer Speichereinrichtung 24 gespeichert, auf welche die Steuereinrichtung 22 zugreifen kann. Die Steuereinrichtung 22 ist ebenfalls mit einer Sensor-Einrichtung 26 verbunden, welche die Einleitung eines Gangwechsels erfasst und/oder eine Zugkraft-Unterbrechung erfasst.

Durch die in Fig. 2 gezeigte Einrichtung kann ein Dämpferkraft-Niveau des Schwingungsdämpfers 16 durch eine externe Ansteuerung in Ansprechen auf den Gangwechsel derart gesteuert werden, dass im Zuge eines Gangwechsels die Lage des Fahrzeugrahmens im wesentlichen beibehalten wird, welches zur Steigerung des Fahrkomforts und zur Verkürzung der Schaltzeit beim Gangwechsel beiträgt.

### Bezugszeichen

- 10: Federelement
- 12: Verbindungselement
- 14: Verbindungselement
- 16: Schwingungsdämpfer
- 18: Druckversorgungseinrichtung
- 20: Druckleitung
- 22: Steuereinrichtung
- 24: Speichereinrichtung
- 26: Sensoreinrichtung

## Patentansprüche

1. Verfahren zur Steigerung des Fahrkomforts sowie zur Verkürzung der Schaltzeit beim Gangwechsel eines Stufengetriebes in einem Kraftfahrzeug, **dadurch gekennzeichnet , dass** zum Zeitpunkt einer Last-Rücknahme im Zuge einer Einleitung eines Gangwechsels des Getriebes die Dämpfung zwischen Fahrzeugrahmen und Vorderachse derart gesteuert wird, dass die Lage des Fahrzeugrahmens im wesentlichen beibehalten wird.

2. Verfahren nach Anspruch 1, **dadurch gekennzeichnet , dass** ein Dämpferkraft-Niveau von wenigstens einem Schwingungsdämpfer (16) der Vorderachse durch eine externe Ansteuerung (18) in Ansprechen auf den bevorstehenden und/oder ablaufenden Gangwechsel gesteuert wird.

3. Verfahren nach Anspruch 2, **dadurch gekennzeichnet , dass** zur Steuerung des Dämpferkraft-Niveaus eine druckseitige Dämpferstufe der Schwingungsdämpfer (16) derart gedrosselt wird, dass die Lage des Fahrzeugrahmens bei Einleitung und während der Durchführung des Gangwechsels im wesentlichen beibehalten wird.

4. Verfahren nach einem der Ansprüche 1 bis 3, g e k e n n z e i c hn e t durch folgende Schritte:
- Erfassen einer Einleitung eines Gangwechsels durch eine Sensoreinrichtung (26) und Erzeugen von diesbezüglichen Erfassungssignalen,
- Zuführen der Erfassungssignale an eine Steuereinrichtung (22),
- Steuern einer Druckversorgungseinrichtung (18) zur Versorgung der Schwingungsdämpfer (16) mit Druck in Ansprechen auf die Erfassungssignale durch die Steuereinrichtung (22), wodurch die Druckzuführung an die Schwingungsdämpfer (16) in Abhängigkeit von Parameterwerten (24) derart gesteuert wird, dass das Dämpferkraft-Niveau erhöht wird und
- Rückführen des Dämpferkraft-Niveaus auf ein Ausgangsniveau vor Einleitung des Gangwechsels innerhalb eines vorbestimmten Rückführungsintervalls.

5. Verfahren nach Anspruch 4, **dadurch gekennzeichnet ,**
**dass** die Druckversorgungseinrichtung (18) zusätzlich in Ansprechen auf vorbestimmte Parameterwerte (24) gesteuert wird.

6. Verfahren nach Anspruch 5, **dadurch gekennzeichnet ,**
**dass** die Parameterwerte (24) Werte in Abhängigkeit vom Gewicht und/oder von der Geschwindigkeit des Kraftfahrzeugs und/oder Werte in Abhängigkeit von der Fahrbahnbeschaffenheit und/oder vom Fahrzeugführer eingegebene Werte enthalten.

7. Verfahren nach Anspruch 4, **dadurch gekennzeichnet ,**
**dass** das Rückführintervall zur Rückstellung der Dämpfereinstellung auf den Ausgangswert vor der Einleitung des Gangwechsels nach Beendigung des Gangwechsels beginnt.

8. Verfahren nach Anspruch 4, **dadurch gekennzeichnet ,**
**dass** abhängig von der geschalteten Gangstufe das Rückführintervall während des Gangwechsels beginnt und die veränderte Dämpfereinstellung zeitlich gesteuert auf das Ausgangsniveau geführt wird.

9. Einrichtung zur Steigerung des Fahrkomforts bei einem Kraftfahrzeug mit:
- Federelementen (10) zur Abstützung jeweils einer Vorderachse (14) gegen einen Fahrzeugrahmen (12), wobei diese jeweils eine federnde Wirkung haben,
- Schwingungsdämpfern (16) zur Abstützung jeweils einer Vorderachse (14) gegen den Fahrzeugrahmen (12), welche parallel zu den Federelementen (10) angeordnet sind, wobei diese zwischen mehreren Zuständen mit unterschiedlich hohem Dämpferkraft-Niveau steuerbar sind,
- mindestens einer Druckversorgungseinrichtung (18) zur Versorgung der Schwingungsdämpfer (16) mit einem Druck,
- einer Sensoreinrichtung (26) zum Erfassen einer Einleitung eines Gangwechsels und
- einer Steuereinrichtung (22), welche in Ansprechen auf einen Gangwechsel und auf vorbestimmte Parameterwerte (24) Steuersignale für die Druckversorgung der Schwingungsdämpfer (16) erzeugt.

10. Einrichtung nach Anspruch 9, **dadurch gekennzeichnet ,**
**dass** die Parameterwerte (24) Werte in Abhängigkeit vom Gewicht und/oder von der Geschwindigkeit des Kraftfahrzeugs und/oder Werte in Abhängigkeit von der Fahrbahnbeschaffenheit und/oder vom Fahrer eingegebene Werte enthalten.

11. Einrichtung nach Anspruch 9 oder 10, **dadurch** g e k e n n - zeichnet, dass die Parameterwerte (24) in Abhängigkeit von der Fahrzeuglängsbeschleunigung und der Gangübersetzung des Getriebes im Antriebsstrang und/oder des resultierenden Hinterachsdrehmomentes veränderbar sind.

12. Einrichtung nach einem der Ansprüche 9 bis 11, **dadurch** g ekennzeichnet, dass diese Einrichtung zum Einbau und zur Nutzung in einem Nutzfahrzeug (beispielsweise einer Sattelschlepper-Zugmaschine) mit einem Auflieger ausgebildet ist.
